# EUROPEAN PATENT APPLICATION

(11) **EP 1 203 783 A1**
(43) Date of publication of application: **08.05.2002**
(21) Application number: 00309754.0
(22) Date of filing: 03.11.2000
(51) Int. Cl.: C08G 63/676, C08G 63/52, C08G 63/78, C08K 3/32, C08L 67/06, C09D 167/06

(54) **Production of unsaturated polyester compositions and their use**

(71) Applicant: Reichhold UK Limited, Mitcham, Surrey CR4 4NA (GB)
(72) Inventor: The designation of the inventor has not yet been filed
(74) Representative: Samuels, Lucy Alice

(57) **Abstract**

The invention provides a process for the production of an unsaturated polyester resin comprising in a first step (1) providing and allowing to react (i) dihydric alcohol or oxide and (ii) dibasic carboxylic acid or anhydride, in a second step (2) adding an unsaturated carboxylic acid or anhydride and optionally further dihydric alcohol or oxide to the reaction mixture and further reacting the reagents, wherein the dihydric alcohol or oxide comprises an ethylene glycol oligomer having from 1 to 4 ethylene oxide units or an oxide of such an oligomer and adding to the resin mixture a fire retardant material which is a solid ammonium polyphosphate or derivative thereof. The product shows improved fire retardancy and can be used in applications such as public transport where this is desired.

## Description

The present invention relates to processes for production of unsaturated polyester resin compositions with improved fire retardancy properties and to the products of these processes. It also relates to the use of such products in applications where fire retardant properties are required.

It is well known to provide thermoset polymer resins which can be set and used by customers, for instance in the form of a matrix with reinforcing glass fibre. Examples of thermoset resins which are commonly supplied for similar applications are phenolic resins and unsaturated polyester resins.

For many applications, the final product is desirably fire retardant. Phenolic resins have inherently good fire retardant properties. They have the advantage that they do not generate smoke. However, they have various disadvantages. They are difficult to process. They are always dark brown in colour, which reduces the scope for potential uses. They exhibit poor weathering performance.

Unsaturated polyester resins have a lower degree of inherent fire retardancy than phenolics. Fire retardancy of unsaturated resins can be increased by modifying the chemical structure or by including additives. Modifiers and additives have in the past been based on halogens, which act to generate halogenated products which quench fire on heating. However, these halogenated products generate toxic gases.

Non-halogenated fire retardant systems for unsaturated polyesters are known. Phosphorus-based additives are available in the form of solid filler (eg ammonium phosphate, boron phosphate) or liquid (eg triethyl phosphate, dimethyl metaphosphonate). Aluminium trihydrate is a further known non-halogenated fire retardant and is a solid filler material.

The known solid non-halogenated fillers have the disadvantage that in order to obtain adequate fire retardancy large amounts (eg 40 to 80%) must be included with the unsaturated polyester resin. As a consequence the resulting product is always opaque. This limits the scope for end uses. High levels of filler also affect the mechanical properties.

Liquid additives have the disadvantage that they act as a plasticiser, leading to poorer mechanical properties. The liquid additives mentioned above have the further disadvantage that some are considered to be potential marine pollutants, thus reducing scope for potential uses.

Therefore it would be desirable to be able to provide thermoset resin based compositions which have improved fire retardancy but exhibit good processing properties, broad scope for potential uses, good weathering performance and good mechanical properties.

According to the invention we provide a process for the production of an unsaturated polyester resin comprising:
in a first step (1) providing and allowing to react (i) dihydric alcohol or oxide and (ii) dibasic carboxylic acid or anhydride,
in a second step (2) adding an unsaturated carboxylic acid or anhydride and optionally further dihydric alcohol or oxide to the reaction mixture and further reacting the reagents,
wherein the dihydric alcohol or oxide comprises an ethylene glycol oligomer having from 1 to 4 ethylene oxide units or an oxide of such an oligomer
and adding to the resin mixture a fire retardant material which is a solid ammonium polyphosphate or derivative thereof.

The product obtained from this process is a novel product and the invention also provides use of this product in applications where fire retardancy is required.

We find that in the specific case where ammonium polyphosphate fire retardant materials are used as fire retardant additives selection of the starting material for the resin leads to unexpected benefits. In particular, selection of an ethylene glycol oligomer such as diethyleneglycol (DEG) as the dihydric alcohol or oxide leads to a synergistic increase in fire retardancy when ammonium polyphosphate fire retardant additive is included. Furthermore, in some cases the resin itself shows increased fire retardancy even without inclusion of a fire retardant additive. We find also that the commercially available ammonium polyphosphate material Firestop® BP 422 exhibits this synergistic effect particularly strongly.

The invention thus leads to greatly improved fire retardancy in unsaturated polyesters.

As a result of this improved fire retardancy, it is now possible to use unsaturated polyesters in a wide variety of applications in which fire retardancy is required. The products produced by the process of the invention have the wide scope for uses of unsaturated polyesters and fire retardancy can be provided in a wide variety of situations not possible with phenolics.

Furthermore, because of the effectiveness of the defined fire retardant additive in resins made according to the invention only low levels are required and thus high levels of solid filler and/or high levels of liquid additive can be avoided.

An advantage of the ability to attain low levels of filler means that products may be produced which are translucent. Furthermore, mechanical properties are good. Similarly, weathering performance is excellent due to the possibility of using unsaturated polyesters rather than having to rely upon phenolics.

Low filler levels lead to better wetting properties when combined with glass fibre, reducing the application time. Surface finish can be improved.

The process is a two step process. In the first step dihydric alcohol or oxide and dibasic carboxylic acid or anhydride are combined. In the second step unsaturated carboxylic acid is added to the reaction mixture. Optionally dihydric alcohol or oxide is added in the second step also. This general reaction is well known for production of unsaturated polyester resins.

In the invention it is essential that at least one stage includes addition of, as part of the dihydric alcohol or oxide, an ethylene glycol oligomer having from 1 to 4 ethylene oxide units or an oxide of such an oligomer. Preferred oligomers are ethylene glycol (EG) and diethylene glycol (DEG), DEG being preferred.

The ethylene glycol oligomer can be added in the first step or the second step or both but is preferably added in the first step, more preferably only in the first step.

The dihydric alcohol or oxide can consist essentially of ethylene glycol oligomer but preferably the process also comprises use of other dihydric alcohol or oxide. Such additional dihydric alcohols or oxides include monopropylene glycol (MPG) and neopentyl glycol (NPG) and their oxides. These may be added in the first step or the second step or both but are preferably added only in the second step.

In a preferred process the dihydric alcohol or oxide added in the first step consists essentially of DEG or EG, preferably DEG alone and the dihydric alcohol or oxide added in the second step consist essentially of MPG and/or NPG and preferably MPG alone.

In the invention we find that the ratio of ethylene glycol oligomer to other dihydric alcohol or oxide is important. Preferably this ratio is at least 1.0, more preferably at least 1.1 and most preferably at least 1.2. Generally it is not more than 7.0. This ratio gives particularly good results when the ethylene glycol oligomer is DEG and the other dihydric alcohol or oxide is MPG.

In the second stage it is essential that an unsaturated carboxylic acid or anhydride is added to the reaction mixture. Any standard unsaturated carboxylic acid known for production of unsaturated polyester resins may be used. Preferred acids are maleic anhydride, fumaric acid, methacrylic acid, acrylic acid and itaconic acid with maleic anhydride and fumaric acid, especially maleic anhydride, being preferred.

In the first stage it is essential that a dibasic carboxylic acid or anhydride is used. Preferred acids include phthalic anhydride, isophthalic and adipic acid. We find that isophthalic acid can give particularly good results especially when DEG is added in the first stage and MPG in the second stage.

Certain ratios of ethylene glycol oligomer added in the first stage to dibasic carboxylic acid can be beneficial. Preferably this ratio is at least 2.0, more preferably at least 2.5. This is particularly valuable when the ethylene glycol oligomer is DEG and the dibasic acid is IPA.

Some of the dibasic acid may be replaced with dicyclopentadiene (DCPD) if desired, in known manner.

The ratio of any dihydric alcohol or oxide added in the second stage to the unsaturated carboxylic acid is preferably less than 0.8, more preferably less than 0.7.

It is preferred that the ratio of total dihydric alcohol or oxide added in both stages to unsaturated carboxylic acid or anhydride is at least 1:1, more preferably at least 11:10.

The ratio of dibasic carboxylic acid or anhydride to unsaturated carboxylic acid or anhydride is preferably at least 1:1 and often not more than 4:1.

As is well-known, after the reaction process the product of the second step is generally dissolved in liquid unsaturated coreactant monomer. Preferably this is styrene but may also be vinyl toluene, methyl methacrylate or diallyl phthalate. Suitable unsaturated monomers are known to those skilled in the art.

Inhibitors may be included in the final mixture as is conventional.

The resin composition may be cured in known manner when thermosetting is required. Suitable accelerators and catalysts include cobalt salts, with hydroperoxide (respectively) such as methyl ethyl ketone hydroperoxides. Aromatic tertiary amines such as diethyl aniline and dimethyl aniline as an accelerator with benzoyl peroxide as a catalyst can also be used. Alternatively the resin may be heat cured at for instance 100 to 140°C, with a high temperature catalyst, for instance where tertiary butyl per benzoate is the peroxide catalyst. Curing may be by UV, using a UV catalyst.

The ammonium polyphosphate fire retardant material is added to the composition, generally after dissolution in unsaturated coreactant liquid monomer and before curing.

The preferred fire retardant additive is the commercially available product Magma Firestop® BP 422 and its derivatives. This is available from AD Productions, Markweg-Zuid 27, 4794 SN Heijningen, Netherlands. The Firestop® range of products are known for use as fire preventives but have not been disclosed as a fire retardant for polyester resins.

The preferred product, Firestop® BP 422, has CAS number 68333-79-9 and EINECS number 2997899.

Firestop® products are available in the form of solid additives or liquid additives. Preferably a solid additive is used. Firestop® BP 422 is a solid additive. Generally the additive is included in amounts not more than 10%, preferably not more than 8%, and about 5% has been found to give good results.

The products of the invention may for instance be used as glass reinforced plastics for a wide range of applications, including sheeting, public transport applications, airport furniture, building applications and marine applications. Since the product may be translucent it is particularly suitable for sheeting applications. It is particularly suited to public transport applications because products for these applications are subject to stringent fire retardancy criteria

The resin products may also be used to form gel coat products by combining them with other components, optionally including pigment (eg 4 to 10%) to produce a coating which may be painted or sprayed onto a surface. It is common to provide this and then additionally provide glass reinforced polyester.

In the invention it is preferred to combine a gel coat of the invention with glass reinforced fibre resin of the invention but it is possible to use gel coat produced according to the invention in combination with other thermoset resins reinforced glass fibre or resin made according to the invention and reinforced with glass fibre together with other gel coat systems.

According to the invention it has been for the first time possible to provide unsaturated polyester resins for fire retardancy applications (especially those in which translucency is also required) which do not contain liquid additive and which contain less than 10% solid filler.

The invention is also applicable to a related class of polymers, dicyclopentadiene polyester resins (DCPD polyesters). These polymers are made in the same way as the unsaturated polyester resins discussed above with the exception that the dibasic acid such as isophthalic acid is fully replaced with DCPD. Thus the invention may be applied to polymers of this type also, with all relevant features as discussed above.

The invention will now be illustrated by reference to the following examples.

### Examples

In the following examples various unsaturated polyester compositions were formulated as follows.

### Example 1

In step one, diethylene glycol and isophthalic acid were charged to a 5000 ml round-bottomed flask and allowed to react at about 210°C for several hours while monitoring the acid number. The reaction mixture was then cooled to 160°C. In step two, mono propylene glycol and maleic anhydride were charged and allowed to react at about 210°C for several hours while monitoring the acid number and viscosity, until a viscous liquid was produced. In the third step stage the alkyd mixture was cast into styrene monomer, inhibited with mono-tertiarybutyl hydroquinone.

In this and all examples the molar amounts of diethylene glycol (DEG), isophthalic acid (IPA), monopropylene glycol (MPG), maleic anhydride (MA) and orthophthalic acid (PA) are stated in Table 1 below.

### Example 2

As Example 1 above, with the exception that MPG and IPA are added in step 1, with no DEG being included. The total amount of MPG was added in the first step.

### Example 3

As Example 1 above, with the molar amounts shown in Table 1 below.

### Example 4

As Example 1 above, but PA is used instead of IPA in step 1.

### Example 5

As Example 1 above, with the difference that some DEG is added in the second stage (5.6 mols) in addition to 14.5 mols in the first stage.

### Example 6

As Example 1 above, with the exception that DEG and MPG are added in step 1 only and no further glycol is added in step 2.

### Example 7

As Example 1 above, with the molar amounts shown in Table 1 below.

**Table 1**

| | | | | | |
|---|---|---|---|---|---|
| 6 | 0.285 | 0.239 | 0.715 | 0.760 | - |
| 7 | 0.601 | 0.239 | 0.398 | 0.760 | - |

The resins were each mixed with 4% (based on resin) of Firestop® BP 422, a solid ammonium polyphosphate fire retardant additive. The product was cured using cobalt accelerator and hydroperoxide catalyst.

The cured resins were then subjected to a limiting oxygen index (LOI) test. This is a standard test and the higher the LOI value the greater the fire retardancy of the resin composition. Results are shown in Table 2 below.

**Table 2**

| **EXAMPLE** | **Resin Type** | **LOI** | **LOI** |
|---|---|---|---|
| | | **BASE RESIN** | **4% BP422** |
| 1 | Isophthalic | 20.8 | 31.0 |
| 2 | Isophthalic | 20.2 | 21.0 |
| 3 | Isophthalic | 21.8 | 28.6 |
| 4 | Orthophthalic | 21.0 | 31.2 |
| 5 | Isophthalic | 22.5 | 34.3 |
| 6 | Isophthalic | 19.8 | 29.8 |
| 7 | Isophthalic | 22.6 | 36.2 |

It can be seen that Example 7 is the most preferred resin, giving the greatest LOI value as a base resin and the greatest increase in LOI on addition of Firestop® BP 422.

### Example 8

In this example the resin of Example 7 is mixed with 2.5% thixotropic agent, 4 to 10% pigment accelerators, UV stabilisers and air release additive. This basic composition gave LOI of 19.0 and on mixing with 4% Firestop® BP 422 gave LOI 28.8.

### Example 9

Various products were coated with the gel coat of Example 8 and the LOI of the product measured. Further, the fire retardancy of these products was measured using BS 476 fire test standard. Results were as shown in Table 3 below.

**Table 3**

| **EXAMPLE** | **%BP422** | **LOI** | **BS 476 Part 7** |
|---|---|---|---|
| Translucent sheeting | 4 | 31.4 | Class 2/SAA |
| Laminating sheeting | 4 | 28.8 | Class 2/SAA |
| Gel coat (Example 8) + laminate (Example 7) composition | 4 | 29.3 | Class 2/SAA |

## Claims

1. A process for the production of an unsaturated polyester resin comprising:
in a first step (1) providing and allowing to react (i) dihydric alcohol or oxide and (ii) dibasic carboxylic acid or anhydride,
in a second step (2) adding an unsaturated carboxylic acid or anhydride and optionally further dihydric alcohol or oxide to the reaction mixture and further reacting the reagents,
wherein the dihydric alcohol or oxide comprises an ethylene glycol oligomer having from 1 to 4 ethylene oxide units or an oxide of such an oligomer
and adding to the resin mixture a fire retardant material which is a solid ammonium polyphosphate or derivative thereof.

2. A process according to claim 1 in which the oligomer is diethylene glycol or ethylene glycol, preferably diethylene glycol.

3. A process according to claim 1 or claim 2 in which the fire retardant material is Firestop® BP 422 or a functionally equivalent derivative thereof.

4. A process according to any preceding claim additionally comprising in a third step (3) dissolving the product of step (2) in liquid unsaturated co-reactant monomer, preferably styrene.

5. A process according to any preceding claim additionally comprising providing dihydric alcohol or oxide in step (2).

6. A process according to claim 5 wherein the dihydric alcohol or oxide provided in stage (1) consists essentially of diethylene glycol and the dihydric alcohol or oxide provided in step (b) consists essentially of monopropylene glycol and/or neopentyl glycol, and preferably consists essentially of monopropylene glycol.

7. A process according to claim 5 in which the dihydric alcohol or oxide provided in stage (1) comprises (A) diethylene glycol the dihydric alcohol or oxide provided in stage (2) comprises (B) monopropylene glycol and/or neopentyl glycol or mixtures thereof and the molar ratio of (A):(B) is at least 1.0:1, preferably at least 1.2:1.

8. A process according to any preceding claim in which the dibasic acid or anhydride is isophthalic acid.

9. A process according to any preceding claim in which the dihydric alcohol or oxide comprises diethylene glycol (DEG) and the dibasic acid or anhydride consists essentially of isophthalic acid (IPA) and the molar ratio of DEG:IPA is at least 2.0, preferably at least 2.5.

10. A process according to any preceding claim in which monopropylene glycol (MPG) is added in step (2) and the unsaturated carboxylic acid is maleic acid (MA) and the molar ratio of MPG:MA is not more than 0.80, preferably not more than 0.70.

11. A process according to any preceding claim in which the first stage (1) comprises reacting diethylene glycol (DEG) with isophthalic acid (IPA) and the second stage (2) comprises addition of monopropylene glycol (MPG) and maleic acid (MA) and the ratio of DEG:MPG is at least 1.0 and the ratio of DEG:IPA is at least 2.0, preferably at least 2.5 and the ratio of MPG:MA is not more than 0.8.

12. A process according to any preceding claim in which the molar ratio of total dihydric alcohol:total dibasic acid or anhydride is at least 11:10.

13. A process according to any preceding claim in which the amount of ammonium polyphosphate fire retardant added is not more than 10%, preferably not more than 8% based on resin.

14. A process according to any preceding claim in which the ammonium polyphosphate fire retardant is the only fire retardant additive included in the composition.

15. A process according to any preceding claim in which the composition is essentially halogen-free.

16. A product obtainable by the process of any of claims 1 to 15.

17. A product according to claim 16 which has been cured and has a limiting oxygen index (LOI) of at least 28.0, preferably at least 30.0, more preferably at least 35.0 .

18. Use of the product of claim 16 in an application where fire retardancy is required.

19. Use of the product of claim 16 to produce a gel coat.

20. Use of an unsaturated polyester resin in an application where fire retardancy is required, wherein the resin composition does not contain liquid fire retardant additive and contains less than 10% solid filler.
